Europäisches Patentamt

European Patent Office

Office européen des brevets

(19)

(11) Veröffentlichungsnummer: **0 327 992 B1**

(12) # EUROPÄISCHE PATENTSCHRIFT

(45) Veröffentlichungstag der Patentschrift:
16.10.91 Patentblatt 91/42

(51) Int. Cl.$^5$: **B65G 47/14**

(21) Anmeldenummer: **89101883.0**

(22) Anmeldetag: **03.02.89**

(54) **Vorrichtung zum Aufrichten und Aufreihen von Formteilen.**

(30) Priorität: **09.02.88 DE 3803852**

(43) Veröffentlichungstag der Anmeldung:
**16.08.89 Patentblatt 89/33**

(45) Bekanntmachung des Hinweises auf die
Patenterteilung:
**16.10.91 Patentblatt 91/42**

(84) Benannte Vertragsstaaten:
**DE NL SE**

(56) Entgegenhaltungen:
**DE-A- 2 659 287**

(73) Patentinhaber: **Schindel, Hugo**
**Obersaulheimerstrasse 64**
**W-6501 Saulheim 1 (DE)**

(72) Erfinder: **Schindel, Hugo**
**Obersaulheimerstrasse 64**
**W-6501 Saulheim 1 (DE)**

(74) Vertreter: **Fischer, Wolf-Dieter, Dipl.-Ing.**
**Patentanwalt Kurfürstenstrasse 32**
**W-6700 Ludwigshafen/Rhein (DE)**

## Beschreibung

Die Erfindung betrifft eine Vorrichtung zum Aufrichten und Aufreihen von länglichen Flaschen, Dosen, Formteilen oder dergleichen verschiedner Form und Größe in eine stehende Position bei obenliegender Einfüllöffnung und anschließender Übergabe an eine Transportvorrichtung mit einer kreisförmigen Drehscheibe, deren Welle zur Vertikalen schräg gestellt ist, wobei um die Drehscheibe ein nach oben hin offenes Gehäuse vorgesehen ist, das unter der Drehscheibe zylindrisch oder trichterförmig ausgebildet ist, daß im Randbereich der Drehscheibe einzelne nach unten zulaufende Fallschächte angeordnet sind und über den Fallschächten mit Schikanen versehene Liegeplätze für die Formteile vorgesehen sind, daß die Liegeplätze in den Außenrand der Drehscheibe eingearbeitete, tangential zum Rand verlaufende Durchtrittsöffnungen sind und die Liegeplätze gegen die Fallschächte durch einen im Bereich der Durchtrittsöffnungen am Gehäuse angebrachten, feststehenden Boden abgesperrt sind, der ab in der Nähe des obersten Punktes der Umlaufbahn des Randes der Drehscheibe für den Durchfall eines Formteiles kurz unterbrochen ist.

Eine Vorrichtung mit diesen Merkmalen ist bekannt (DE-PS 2651495), bei der die im Rand der Drehscheibe eingearbeiteten Durchtrittsöffnungen als Liegeplätze für die Formteile in etwa der Länge dieser Formteile angepaßt sind. Das Formteil muß dabei derart in seinem Liegeplatz angeordnet sein, daß es mit seiner Einfüllöffnung, bei einem Flaschenkörper ist dies der Flaschenhals, nach oben gerichtet in den Fallschacht gelangt. Beinach einer Seite hin offenen Bechern oder Dosen müssen am Rand der Durchtrittsöffnung entsprechende Formstücke angebracht sein, wobei weiterhin im Schacht noch zusätzliche Kippteile angebracht sind, um das Formteil in der richtigen Position in den Fallschacht zu leiten. Der wesentliche Nachteil dieser Ausbildung der Liegeplätze für die Formteile besteht darin, daß für die Vielzahl von zu verarbeitenden Formteilen die Liegeplätze enthaltenden Ringsegmente am Umfang der Drehscheibe ausgewechselt werden müssen. Dieses Auswechseln ist zeit- und kostenaufwendig und es müssen eine Vielzahl von derartigen Ringsegmenten bevorratet werden. Ein weiterer wesentlicher Nachteil besteht darin, daß die eng angepaßten Durchtrittsöffnungen der Liegeplätze eine optimale Belegung in der drehenden Scheibe erschweren, da von der mit höchstmöglicher Drehzahl laufenden Scheibe nicht durch jeden Liegeplatz ein Formteil transportiert wird. Die deformierten Formteile und auch schlecht fallende Formteile können beim Durchtritt durch die enge Öffnung hängenbleiben, was zu Funktionsstörungen führen kann. Durch die knappe Belegung der Schächte müssen höhere Drehzahlen gefahren werden, was sich wiederum nachteilig an der Flaschenübergabe von den Schächten auf das Transportband auswirkt.

Der Erfindung liegt die Aufgabe zugrunde, eine Vorrichtung der eingangs genannten Art so auszubilden, daß die Durchtrittsöffnung so groß gestaltet werden kann, daß ohne Auswechseln der Ringsegmente eine Vielzahl von Formen verarbeitet werden kann und hierbei besondere Schikanen eingespart werden können.

Die Aufgabe wird nach der Erfindung dadurch gelöst, daß als Schikanen im Bereich der Durchtrittsöffnungen angeordnet, verschwenkbare oder verschiebbare Böden oder Auflagen vorgesehen sind, deren Position in Abhängigkeit von der Lage des Formteiles mittels einer optischen oder elektronischen Einrichtung steuerbar ist.

Eine vorteilhafte Ausführungsform besteht darin, daß an der der Welle der Drehscheibe zugewandten Seite des Fallschachtes ein in die Durchtrittsöffnung hineinragender Hebel als Schikane gelagert ist, der in die eine Endstellung mittels einer festen Anschlagrolle und in die andere Endstellung mittels einer steuerbaren Anschlagrolle verschwenkbar ist, wobei die steuerbare Anschlagrolle im Bereich oder der optischen oder elektronischen Einrichtung in Laufrichtung gesehen nachgeordnet ist. Weiterhin ist es vorteilhaft, daß der Hebel an der Rückwand des Fallschachtes gelagert ist und daß an der herausragenden Schwenkachse ein quer dazu verlaufender Stift angebracht ist, der zur Begrenzung der Schwenkbewegung an Anschlägen zur Anlage kommt.

Es ist weiterhin vorteilhaft, daß als Schikane in der Durchtrittsöffnung angeordnete, an der Mitte der Öffnung geteilte Böden oder wegziehbare Böden oder Bolzen vorgesehen sind.

Schließlich ist es vorteilhaft, daß zur Bewegungssteuerung der Böden oder Bolzen pneumatische oder elektromechnische Antriebe oder eine mechanische Weichenstellung vorgesehen ist.

Die Erfindung bringt den wesentlichen Vorteil, daß bei einer bestimmten Größe der Durchtrittsöffnung und damit auch des Liegeplatzes für die Formteile eine bestimmte Anzahl verschiedener Größen verarbeitet werden kann, ohne daß hierbei die Segmente ausgewechselt werden müssen. Es ergibt sich der weitere Vorteil, daß die im Rand der Drehscheibe angeordneten Liegeplätze durch eine optimale Belegung ausgenutzt werden, so daß die Drehscheibe mit einer günstigen Geschwindigkeit angetrieben werden kann. Damit ergibt sich auch eine besonders schonende Behandlung der Formteile.

Die Erfindung wird in der nachfolgenden Beschreibung anhand eines in den Zeichnungen dargestellten Ausführungsbeispiels näher erläutert.

Es zeigen,

| Fig. 1 | eine schaubildliche Ansicht eines Ausführungsbeispiels einer derartigen Vorrichtung, |
| Fig. 2 | einen Längsschnitt durch eine derartige Vorrichtung, |
| Fig. 3 | eine Draufsicht auf die Vorrichtung, |
| Fig. 4 | einen Teilschnitt durch die Vorrichtung mit der festen Anschlagrolle, |
| Fig. 5 | einen Teilschnitt durch die Vorrichtung mit der steuerbaren Anschlagrolle, |
| Fig, 6 | einen Teilschnitt durch die Drehscheibe mit dem darunter angeordneten Fallschacht in der obersten Stellung der Umlaufbahn, |
| Fig. 7 | einen Grundriß von Fig. 6, |
| Fig. 8 und 9 | entsprechende Darstellungen gemäß den Figuren 6 und 7 bei umgekehrt angeordnetem Formteil, |
| Fig. 10 | eine Seitenansicht eines Segmentes mit dem Fallschacht im Schnitt, |
| Fig. 11 | eine teilweise Vorderansicht des Segmentes, |
| Fig. 12 | eine Draufsicht auf ein derartiges Segment, |
| Fig. 13 | ein Blockschaltbild für die Ausführungsform einer elektronischen Steuereinrichtung an einem ersten Erkennungsort und |
| Fig. 14 | die Steuereinrichtung bei einem weiteren Erkennungs ort. |

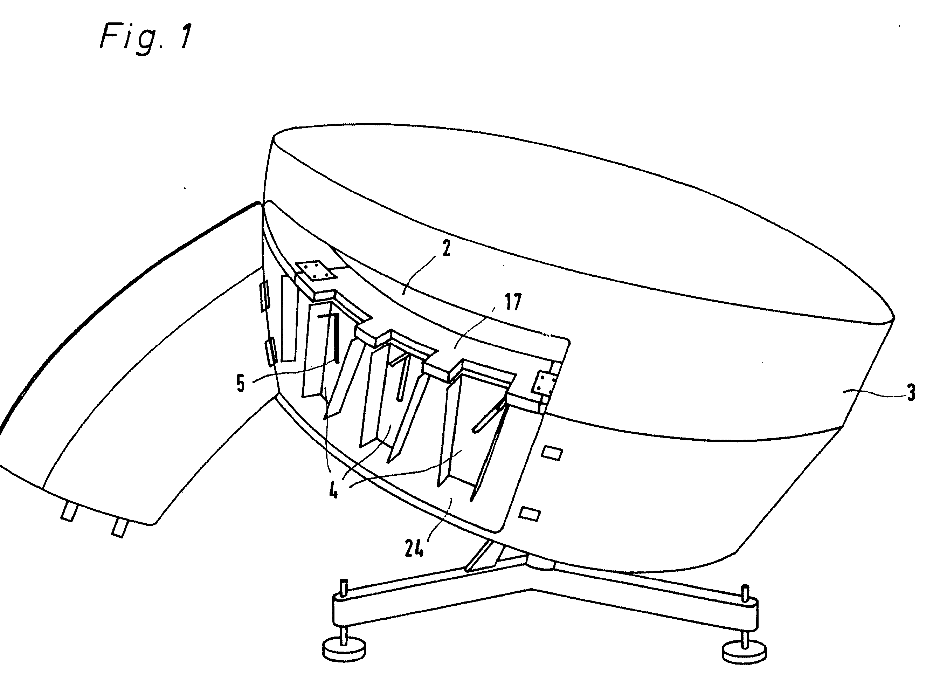

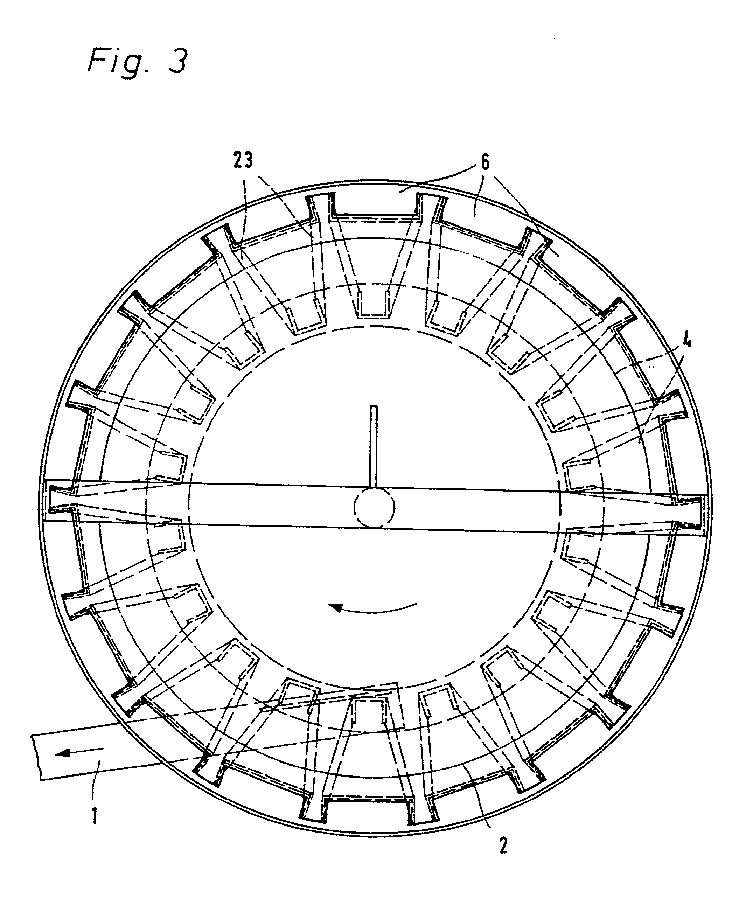

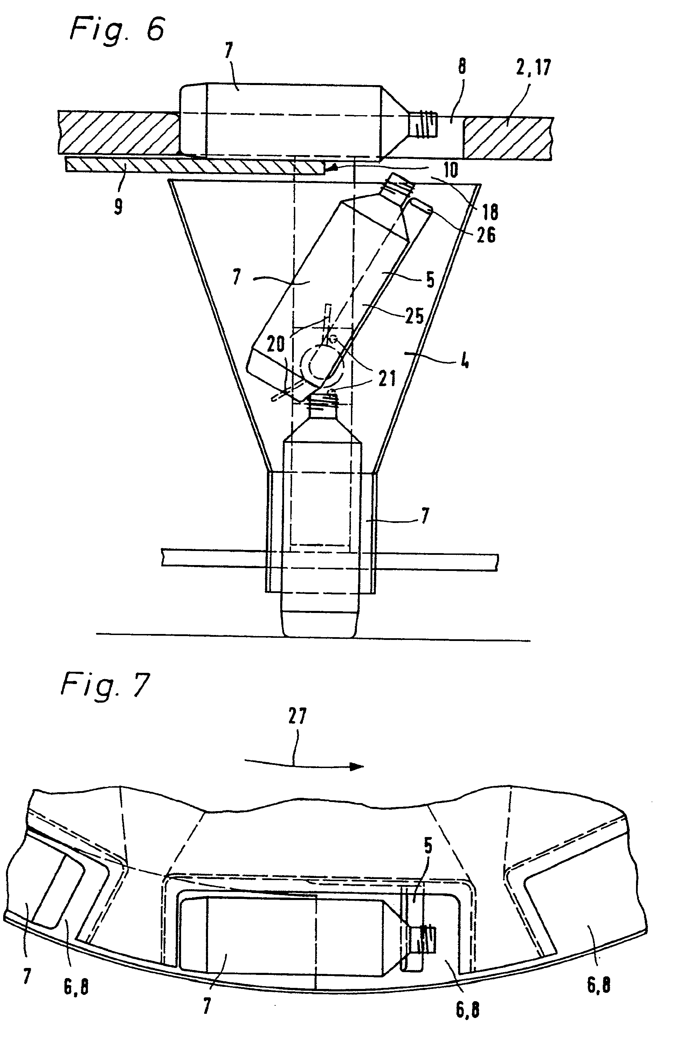

Der gesamte Aufbau der Vorrichtung ergibt sich insbesondere aus den Figuren 1 bis 3. Die Vorrichtung besitzt insbesondere eine kreisförmige, schräg gestellte, rotierende Drehscheibe 2, die an einer zur Vertikalen geneigten Welle 11 angeordnet ist. Am Umfang der Drehscheibe 2 sind einzelne Ringsegmente 17 angebracht, wobei am äußeren Rand dieser Ringsegmente 17 rechteckförmige Durchtrittsöffnungen 8 vorgesehen sind, die als Liegeplätze 6 für die zu transportierenden Formteile 7 vorgesehen sind. Die Längserstreckung dieser Durchtrittsöffnungen 8 erfolgt in Tangentialrichtung zur Drehscheibe 2. Unterhalb der Drehscheibe 2 befindet sich eine mit dieser zusammen rotierende kreisförmige Unterlage 16, die in einem Ringbereich 22 am Umfang der Drehscheibe 2 vorsteht und auf dem die Ringsegmente 17 teilweise abgestützt sind. An den Ringsegmenten 17 sind jeweils im Bereich einer Durchtrittsöffnung 8 Fallschächte 4 angebracht, die einen U-förmigen Querschnitt aufweisen und zwei seitliche Wände 23 und eine zur Welle 11 gerichtete Rückwand 12 besitzen. Diese Fallschächte 4 verengen sich nach unten hin, was beispielsweise in den Figuren 3, 6, 8 und 11 erkennbar ist. Die Drehscheibe 2 zusammen mit den Ringsegmenten 17 ist innerhalb eines Gehäuses 3 angeordnet, das oberhalb der Scheibe 2 zylindrisch ausgebildet ist und unterhalb der Scheibe 2 trichterförmig verläuft. Im Randbereich der Ringsegmente 17 befindet sich unterhalb der Durchtrittsöffnungen 8 ein am Gehäuse 3 angebrachter feststehender Boden 9, der in etwa bis zum obersten Punkt 10 der Umlaufbahn reicht und dort für den Durchtritt der Formteile eine Unterbrechung 18 aufweist (Fig. 6 bis 9 und 14). Im Bereich des obersten Punktes 10 der Umlaufbahn sind die Fallschächte 4 senkrecht angeordnet und es werden die Formteile 8 in dieser senkrechten Position an eine Transportvorrichtung 1 übergeben. Das Gehäuse 3 ist mit einem Boden 24 versehen, der gleichzeitig die Fallschächte 4 begrenzt.

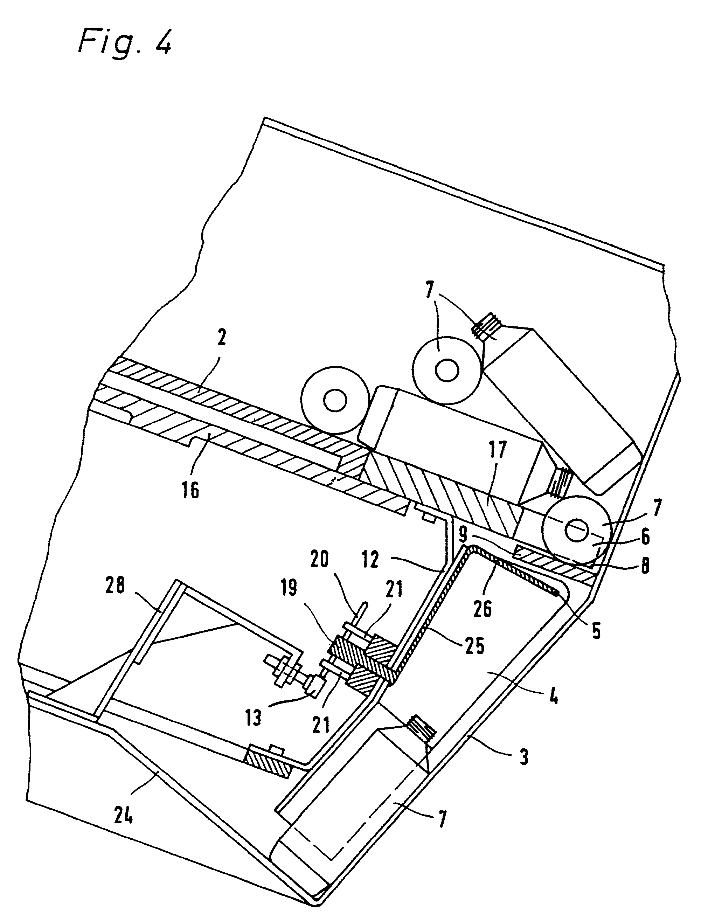

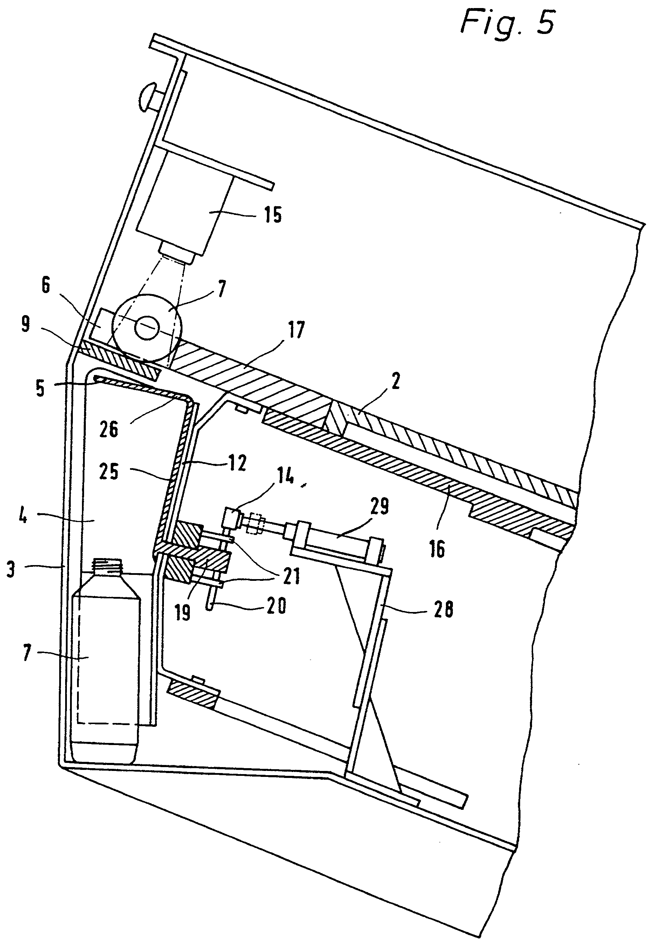

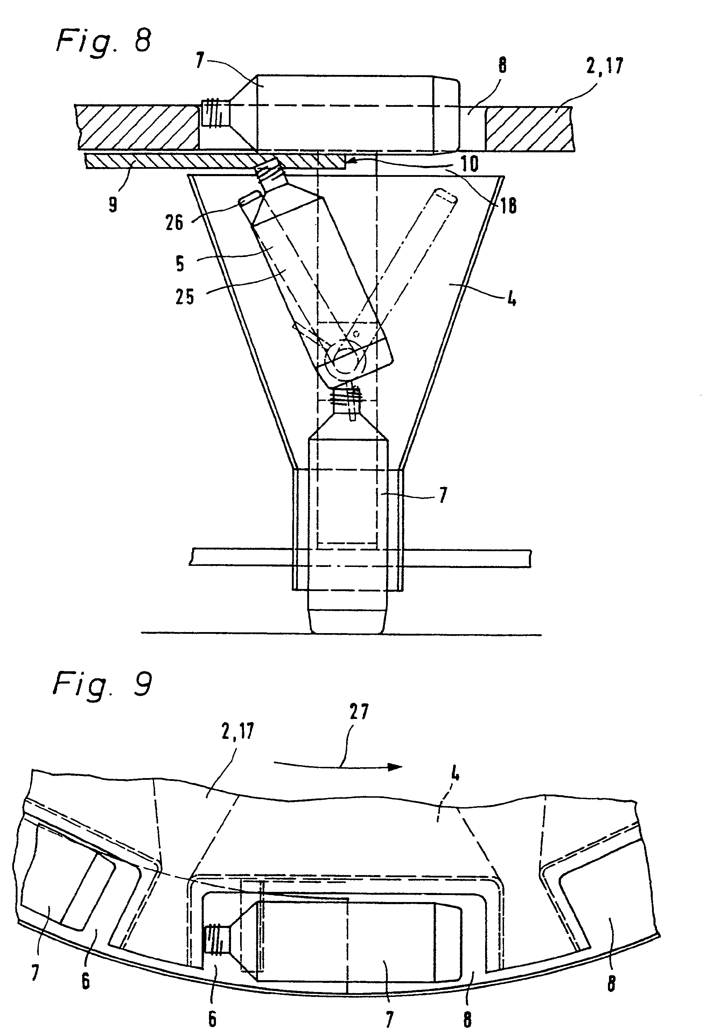

Die einzelnen Formteile 7 werden vom tiefsten Punkt der Vorrichtung in ihren Liegeplätzen 6 angeordnet zum obersten Punkt 10 der Umlaufbahn transportiert. Hierbei muß dafür gesorgt werden, daß die Formteile derart in den Fallschacht gelangen, daß sich die Einfüllöffnung des Formteiles 7 oben befindet. Dazu ist jedem Fallschacht 4 eine besondere Schikane 5 zugeordnet, die bei dem in den Zeichnungen dargestellten Ausführungsbeispiel aus einem L-förmigen Hebel besteht, der einen in Richtung des Schachtes nach unten verlaufenden länglichen Arm 25 und einen quer über die Öffnung 8 reichenden Finger 26 aufweist. Die Ausbildung der Schikane 5 ist insbesondere aus den Fig. 4 bis 9 erkennbar. Am unteren Ende des länglichen Armes 25 ist eine Schwenkachse 19 vorgesehen, die an der Rückwand 12 des Fallschachtes 4 gelagert ist. Die Lagerung befindet sich im unteren Bereich des Fallschachtes und etwa in der Mitte (Fig. 6 und 8). Am Ende der Schwenkachse 19 ist ein quer zur Achsrichtung verlaufender Stift 20 vorgesehen. Durch Anschläge 21, die in Form von an der Rückwand 12 angebrachten Stiften vorgesehen sind, werden die beiden Endstellungen des Hebels 5 begrenzt. Zur Anpassung an verschieden große Formteile 7 in den Liegeplätzen 6 ist der Schwenkwinkel der Schikane 5 und damit die Lage des Fingers 26 verstellbar. Dies beispielsweise durch Einstecken der Stifte 21 an anderen Stellen der Rückwand 12. Befindet sich beispielsweise die Öffnung des Formteiles 7 in Laufrichtung 27 gesehen vorne (Fig. 6 und 7), dann ist der Hebel 5 nach vorne geschwenkt, so daß sich die Öffnung des Formteiles 7 am Finger 26 abstützen kann. Ist hingegen die Öffnung entgegen der Laufrichtung 27 angeordnet (Fig. 8 und 9), dann ist der Hebel 5 in die entgegengesetzte Richtung verschwenkt, so daß auch hier die Öffnung des Formteiles am Finger 26 abgestützt wird und dann das Formteil entsprechend in den Fallschacht 4 gelangen kann. Die Steuerung der Bewegung erfolgt durch eine feste Anschlagrolle 13 und eine steuerbare Anschlagrolle 14. Die feste Anschlagrolle 13 befindet sich an der Umlaufbahn nach dem Abwurf des Formteiles 7, in der Zeichnung in etwa im Bereich des tiefsten Punktes der Umlaufbahn hinter der Rückwand 12 der Fallschächte 4 und ist an einer Halterung 28, beispielsweise am Boden 24 des Gehäuses 3, befestigt. An dieser festen Anschlagrolle 13 werden die Hebel 5 grundsätzlich in einer Richtung ausgerichtet. Zur Erkennung der Lage der Formteile 7 befindet sich im Bereich der Umlaufbahn in Richtung des obersten Kurvenpunktes 10, d.h. in einer Lage, in der die Formteile vereinzelt sind, eine optische oder elektronische Einrichtung 15. In dieser Position oder in Laufrichtung 27 gesehen danach, aber vor der Unterbrechung 18 des Bodens 9, befindet sich die steuerbare Anschlagrolle 14 (Fig. 5), die ebenfalls an einer Halterung 28 angebracht ist. Die steuerbare Anschlagrolle 14 ist an einem Pneumatikzylinder 29 angebracht, der in Abhängigkeit von der Lage des Formteiles 7 in seinem Liegeplatz 6 und der Stellung des Hebels 5 gesteuert wird.

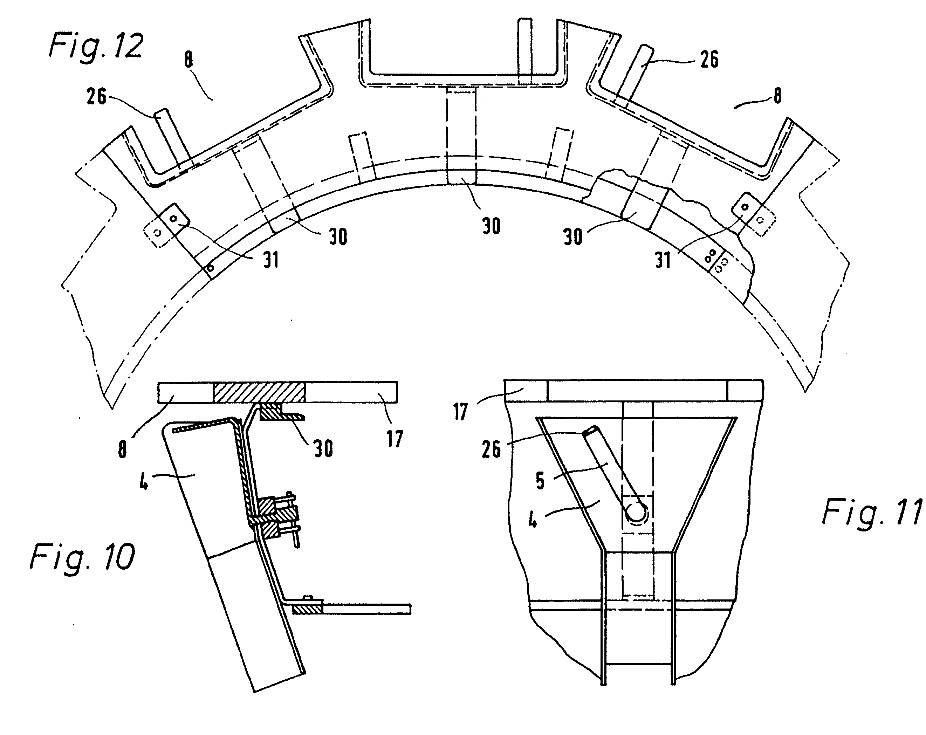

Die Fig. 10 bis 12 zeigen die Ausbildung des Ringsegmentes 17, wobei an diesem Ringsegment entsprechend den Durchtrittsöffnungen 8 Fallschächte 4 angebracht sind, sowie einzelne Steckschuhe 30, mit denen das Ringsegment 17 über den Randbereich 22 der kreisförmigen Unterlage 16 geschoben wird. Die Ringsegmente 17 werden auf die kreisförmige Unterlage 16 aufgesteckt und mit Verbindungslaschen 31 zwischen benachbarten Segmenten 17 verschraubt.

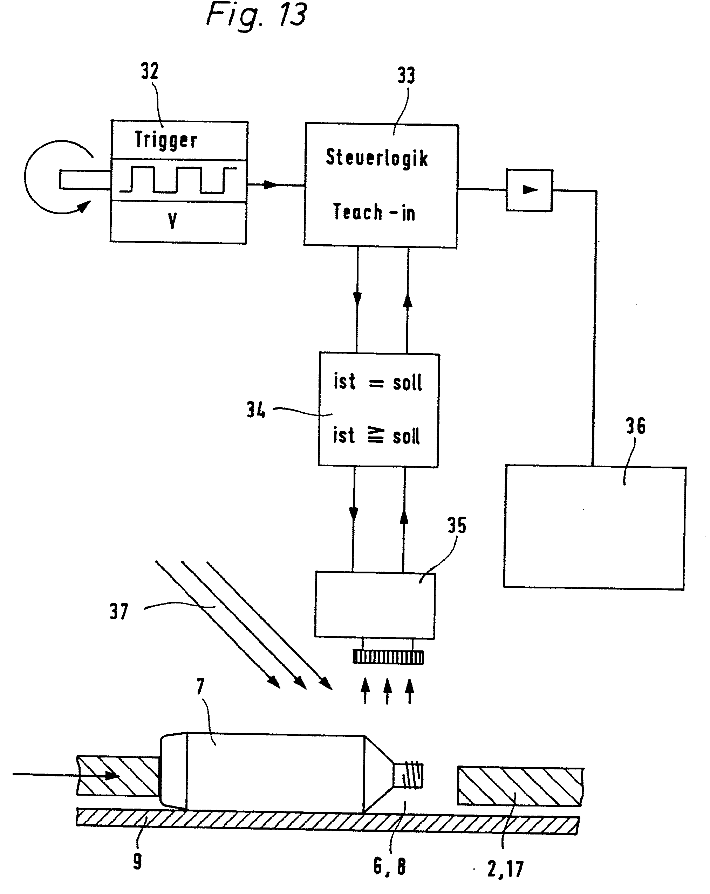

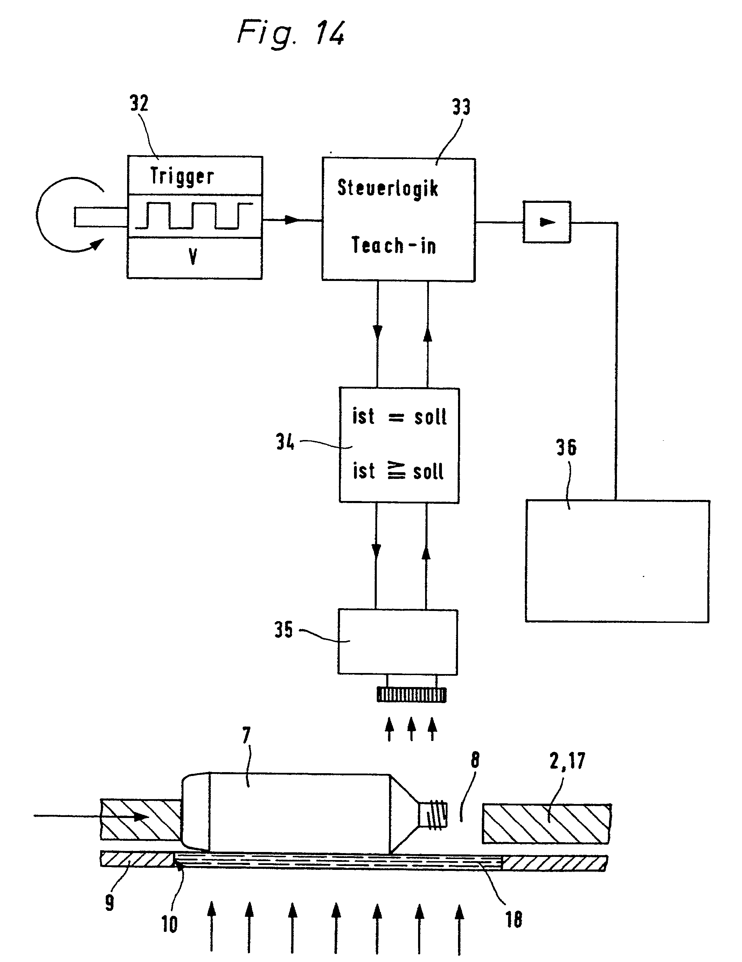

In den Fig. 13 und 14 ist die Steuereinrichtung dargestellt, die die Anschlagrolle 14 betätigt. Die Steuereinrichtung besitzt eine Triggereinheit 32, die als Synchronisationselement für die Geschwindigkeit der Scheibe, die Position der Flaschen in der Scheibe, eine gezielte Lichtquellensteuerung sowie für die positions- und geschwindigkeitsgerechte Steuerung der Mechanik und des Zeitpunkts des Vergleichsvorganges in der Steuerelektronik verantwortlich ist. Die nachgeordnete Steuerlogik 33 wertet die von dem nachgeordneten Vergleichsgerät 34 und dem optischen Erkennungssystem 35 erhaltenen Informationen unter Vergleich mit dem Ideal aus und gibt die entsprechenden Signale zu einem Steuergerät 36, das dann dem Pneumatikzylinder 29 der steuerbaren Anschlagrolle 14 betätigt. Dem optischen Erkennungssystem ist eine getriggerte Lichtquelle 37 zugeordnet.

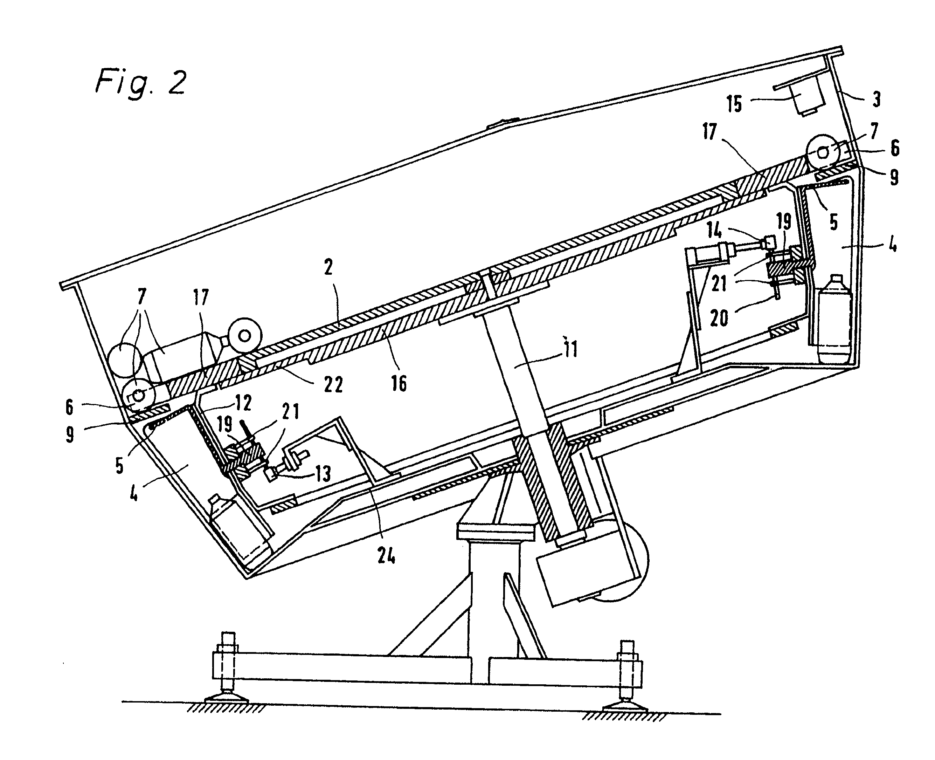

Mit Hilfe der optischen oder elektronischen Einrichtung 15 (Fig. 2) läßt sich die genaue Position des Formteiles in seinem Liegeplatz 6 erkennen und die Anschlagrolle 14 entsprechend ansteuern. Als optisches Erkennungssystem kann beispielsweise eine Fotozelle oder eine Ein- oder Mehrzeilenkamera (CCD) vorgesehen werden. Zur Erkennung der Lage der Behältnisse und Formteile 7 kann auch eine andere elektronische Einrichtung, z.B. ein Initiator, eine Ultraschalleinrichtung oder eine Lasereinrichtung verwendet werden.

In dem in den Zeichnungen dargestellten Ausführungsbeispiel liegt als Schikane 5 ein besonderer Hebel vor. An Stelle eines solchen Hebels kann auch ein in der Mitte der Öffnung 8 geteiltet Boden vorgesehen sein. Weiterhin kann als Schikane ein wegziehbarer Boden oder Bolzen verwendet werden.

## Patentansprüche

1. Vorrichtung zum Aufrichten und Aufreihen von länglichen Flaschen, Dosen, Formteilen oder dergleichen verschiedener Form und Größe in eine stehende Position bei obenliegender Einfüllöffnung und anschließender Übergabe an eine Transportvorrichtung mit einer kreisförmigen Drehscheibe (2), deren Welle zur Vertikalen schräg gestellt ist, wobei um die Drehscheibe ein nach oben hin offenes Gehäuse (3) vorgesehen ist, das unter der Drehscheibe zylindrisch oder trichterförmig ausgebildet ist, daß im Randbereich der Drehscheibe einzelne nach unten zulaufende Fallschächte (4) angeordnet sind und über den Fallschächten mit Schikanen (5) versehene Liegeplätze (6) für die Formteile (7) vorgesehen sind, daß die Liegeplätze (6) in den Außenrand der Drehscheibe eingearbeitete, tangential zum Rand verlaufende Durchtrittsöffnungen (8) sind und die Liegeplätze gegen die Fallschächte durch einen im Bereich der Durchtrittsöffnungen am Gehäuse angebrachten, feststehenden Boden (9) abgesperrt sind, der ab in der Nähe des obersten Punktes (10) der Umlaufbahn des Randes der Drehscheibe für den Durchfall eines Formteiles kurz unterbrochen ist, dadurch gekennzeichnet, daß als Schikanen (5) im Bereich der Durchtrittsöffnungen (8) angeordnete, verschwenkbare oder verschiebbare Böden oder Auflagen vorgesehen sind, deren Position in Abhängigkeit von der Lage des Formteiles (7) mittels einer optischen oder elektronischen Einrichtung (15) steuerbar ist.

2. Vorrichtung nach Anspruch 1, dadurch gekennzeichnet, daß an der der Welle (11) der Drehscheibe (2) zugewandten Seite (12) des Fallschachtes (4) ein in die Durchtrittsöffnung (8) hineinragender Hebel (5) als Schikane gelagert ist, der in die eine Endstellung mittels einer festen Anschlagrolle (13) und in die andere Endstellung mittels einer steuerbaren Anschlagrolle (14) verschwenkbar ist, wobei die steuerbare Anschlagrolle (14) im Bereich oder der optischen oder elektronischen Einrichtung (15) in Laufrichtung gesehen nachgeordnet ist.

3. Vorrichtung nach Anspruch 1 und 2, dadurch gekennzeichnet, daß der Hebel (5) an der Rückwand (12) des Fallschachtes (4) gelagert ist und daß an der herausragenden Schwenkachse (19) ein quer dazu verlaufender Stift (20) angebracht ist, der zur Begrenzung der Schwenkbewegung an Anschlägen (21) zur Anlage kommt.

4. Vorrichtung nach Anspruch 1, dadurch gekennzeichnet, daß als Schikane (5) in der Durchtrittsöffnung

4

(8) angeordnete, an der Mitte der Öffnung (8) geteilte Böden oder wegziehbare Böden oder Bolzen vorgesehen sind.

5. Vorrichtung nach Anspruch 4, dadurch gekennzeichnet, daß zur Bewegungssteuerung der Böden oder Bolzen pneumatische oder elektromechanische Antriebe oder eine mechanische Weichenstellung vorgesehen ist.

## Claims

1. Apparatus for the righting and arraying of oblong bottles, can, shaped parts or the like of various form and size into a standing position with filling opening lying above and following transfer to a transport device with a circular turntable (2), the shaft of which is set obliquely to the vertical, in which there is provided a housing (3) open at the top around the turntable, which is constructed cylindrical or funnel-shaped under the turntable, that in the border zone of the turntable there are arranged individual fall shafts (4) converging downward and over the fall shafts there are provided reclining places (6) provided with baffle plates (5) for the shaped parts (7), that the reclining places (6) are passage openings (8) running tangentially to the border, made in the outer border of the turntable, and the reclining places are blocked off against the fall shafts by a fixed floor (9) arranged in the zone of the passage openings on the housing, which floor is briefly interrupted in the vicinity of the uppermost point (10) of the revolution path of the border of the turntable for the dropping-through of a shaped part, characterized in that as baffle plates (5) there are provided swingable or shiftable floors or overlays arranged in the zone of the passage openings (8), the position of which floors or overlays is controllable in dependence on the position of the shaped part (7) by means of an optical or electronic arrangement (15).

2. Apparatus according to claim 1, characterized in that on the side (12) of fall shaft (4) facing the shaft (11) of the turntable (2) there is borne as baffle plate a lever (5) extending into the passage opening (8), which lever is swingable into the one end position by means of a fixed stop roll (13) and into the other end position by means of a controllable stop roll (14), in which system the controllable stop roll (14) is arranged on outlet side of the optical or electronic arrangement (15) as seen in running direction.

3. Apparatus according to claim 1, characterised in that the lever (5) is borne on the back wall (12) of the fall shaft (4) and that on the projecting swinging axle (19) there is mounted a pin (20) running transversely thereto which comes into engagement for the limitation of the swinging movement on stops (21).

4. Apparatus according to claim 1, characterised in that as baffle plate (5) there are provided, arranged in the middle of the opening (8), divided floors or retractable floors or bolts.

5. Apparatus according to claim 4, characterised in that for the movement control of the floors or bolts there are provided pneumatic or electromechanical drives or a mechanical deflector setting.

## Revendications

1. Dispositif pour relever et aligner des bouteilles, boîtes, pièces moulées ou analogues allongées de forme et de taille variables dans une position debout, avec ouverture de remplissage située en haut et transfert consécutif à un dispositif de transport, avec un plateau tournant circulaire (2) dont l'arbre est incliné par rapport à la verticale, un carter (3) ouvert vers le haut et présentant, au-dessous dudit plateau tournant, une forme cylindrique ou en entonnoir étant prévu autour du plateau tournant, différents puits de descente (4) se rétrécissant vers le bas étant disposés dans la région marginale du plateau tournant et des logements (6) pour les pièces moulées (7) munis de chicanes (5) étant prévus au-dessus des puits de descente, lesdits logements (6) étant constitués par des ouvertures de passage (8) ménagées dans le bord extérieur du plateau tournant et s'étendant tangentiellement audit bord, et lesdits logements étant bloqués par rapport aux puits de descente par une fond fixe (9) qui est disposé sur le carter, dans la région des ouvertures de passage, et brièvement interrompu, à partir du point (10) le plus élevé du plan de mouvement de rotation du bord du plateau tournant, pour la descente d'une pièce moulée, **caractérisé en ce** que, dans la région des ouvertures de passage (8), il est prévu, comme chicanes (5), des fonds ou appuis pivotants ou déplaçables dont la position peut être commandée en fonction de la position de la pièce moulée (7) au moyen d'un dispositif optique ou électronique (15).

2. Dispositif selon la revendication 1, caractérisé en ce que sur la face (12) du·puits de descente (4) dirigée vers l'arbre (11) du plateau tournant (2) est monté en tant que chicane un levier (5) qui dépasse dans l'ouverture de passage (8) et qui peut être amené dans l'une des positions de fin de course au moyen d'un galet de butée fixe (13) et dans l'autre position de fin de course, au moyen d'un galet de butée réglable (14), le galet de butée réglable (14) étant disposé, dans la région du dispositif optique ou électronique (15), en aval, vu dans le sens du déplacement.

3. Dispositif selon les revendications 1 et 2, caractérisé en ce que le levier (5) est monté sur la paroi arrière (12) du puits de descente (4) et que l'axe de pivotement (19) en saillie porte une cheville (20) s'étendant trasversalement audit axe et entrant en contact avec des butées (21) pour limiter le mouvement de pivotement.

4. Dispositif selon la revendication 1, caractérisé en ce qu'il est prévu comme chicane (5) des fonds ou des broches disposés dans l'ouverture de passage (8) et divisées ou escamotables au milieu de l'ouverture (8).

5. Dispositif selon la revendication 4, caractérisé en ce que pour la commande du mouvement des fonds ou des broches, il est prévu des mécanismes d'entraînement pneumatiques ou électromécaniques ou un système d'aiguillage mécanique.

Fig. 1

EP 0 327 992 B1

Fig. 2

EP 0 327 992 B1

Fig. 3

# Fig. 4

*Fig. 5*

Fig. 6

Fig. 7

12

EP 0 327 992 B1

Fig. 8

7    8    2,17

9

10

26

5

25    4

18

7

Fig. 9

27

2,17    4

7    6    8

6    7    8

13

Fig.12

Fig.10

Fig.11

EP 0 327 992 B1

# Fig. 13

## Fig. 14